# EUROPEAN PATENT APPLICATION

(11) **EP 4 723 006 A1**
(43) Date of publication of application: **08.04.2026**
(21) Application number: 24811066.0
(22) Date of filing: 17.05.2024
(51) Int. Cl.: G06Q 10/0833, G10L 15/10

(54) **DELIVERY ASSISTANCE DEVICE, DELIVERY ASSISTANCE SERVER, DELIVERY ASSISTANCE SYSTEM, DELIVERY ASSISTANCE METHOD, AND PROGRAM**

(30) Priority: 24.05.2023 JP 2023085552
(71) Applicant: DENSO CORPORATION, Kariya-city, Aichi-pref. 448-8661 (JP)
(72) Inventor: TOYAMA, Ryo, Kariya-city, Aichi-pref., 448-8661 (JP)
(74) Representative: Winter, Brandl - Partnerschaft mbB
(86) International application number: PCT/JP2024/018366
(87) International publication number: WO 2024/242059

(57) **Abstract**

A in-vehicle process unit (25) of an in-vehicle device (9) supports a delivery person in a task of delivering a delivery item to a delivery destination. The in-vehicle process unit (25) analyzes voice data of conversation between the delivery person and a customer of the delivery destination or utterance of the delivery person when the delivery item is delivered, and recognizes that delivery of the delivery item is complete. Further, when recognizing that the delivery of the delivery item is complete, a delivery completion notification is sent to a predetermined notification target, such as a server (61) or the like.

## Description

### CROSS REFERENCE TO RELATED APPLICATION

The present application is based on Japanese Patent Application No. 2023-085552 filed on May 24, 2023. The entire disclosures of all of the above applications are incorporated herein by reference.

### TECHNICAL FIELD

The present disclosure relates to a technology that is capable of supporting delivery of delivery items such as packages.

### BACKGROUND ART

Conventionally, when a package is delivered to a delivery destination, for example, after completion of delivery, a delivery person operates a terminal in his or her possession to register the completion of delivery.

In recent years, in order to improve convenience for the delivery person (e.g., for use in resolving problems as they arise), a technology has been proposed to record conversation between the delivery person and a delivery destination at the time of delivery on a terminal or similar device (see, for example, Patent Literature 1 cited below).

### PRIOR ART LITERATURE

### PATENT LITERATURE

PATENT LITERATURE 1: JP2022-154782A

### SUMMARY OF INVENTION

As a result of a detailed investigation by the inventor, the following problems are found in the technology in the prior art.

When a delivery is complete, the completion of delivery must be registered to the delivery system by operating a terminal, which is an issue of putting a burden on the delivery task and hindering smooth delivery.

In addition, when a delivery person forgets to register a delivery, it is impossible to register an exact time of delivery to the delivery system. Further, when the delivery system determines that a delivery has not been made due to forgetting to register, it is necessary to follow up to complete the delivery (e.g., to confirm the delivery or the like), which also causes extra man-hours to be spent.

Thus, when the delivery person manually register the completion of delivery, there are various problems associated with such registration, and further improvement in delivery task has been desired.

In one aspect of the present disclosure, it is desired to provide a technology that can improve delivery task.
(a) One aspect of the present disclosure relates to a delivery support device that supports a delivery person in a task of delivering a delivery item to a delivery destination.

The delivery support device includes a delivery completion recognition unit and a delivery completion notification unit.

The delivery completion recognition unit is configured to analyze voice data of a conversation between the delivery person and a customer at a delivery destination or delivery person's utterance, which takes place during delivery of the delivery item, and to recognize that the delivery of the delivery item has been complete.

The delivery completion notification unit is configured to notify a predetermined notification target of a completion of the delivery when the delivery completion recognition unit recognizes that the delivery is complete.

Such a configuration can improve the delivery task. In other words, the present disclosure analyzes the voice data of the conversation between the delivery person and the customer at the delivery destination or the delivery person's utterance during delivery of the delivery item, and if it is recognized that the delivery is complete, it can notify a predetermined notification target (for example, a delivery support server) that the delivery is complete.

Therefore, when the delivery is complete, a manual operation of a terminal or the like by the delivery person to register the completion of delivery to a delivery support server or the like is omissible, which was required in the past. Thus, the burden on the delivery task is reducible, exerting an effect of smooth delivery (i.e., improving the efficiency of the delivery task).

Further, forgetting to register by the delivery person is suppressible, thereby enabling a securer delivery time registration (i.e., a delivery completion time) to the delivery support server when the delivery time is registered thereto or the like. Further, forgetting to register by the delivery person is suppressible, thereby suppressing an occurrence of the extra man-hours for a follow up on the completion of delivery.
(b) Another aspect of the present disclosure relates to a delivery support server that supports a delivery person in a task of delivering a delivery item to a delivery destination.

The delivery support server is configured to receive, from outside, a delivery completion notification indicating that the delivery is complete, which is based on analysis of voice data of a conversation between the delivery person and the customer at the delivery destination or the delivery person's utterance during delivery of the delivery item, and time information including the completion time of delivery of the delivery item acquired based on information on time of the voice data, and/or a gap between the completion time of delivery and a scheduled time of delivery. Further, the server is configured to register delivery-completed item information to a database, by linking the delivery completion notification and time information.

Such a configuration enables the completion of delivery of the delivery item and a status of delivery (e.g., delivery completion time) regarding the delivery item to be accurately grasped.
(c) Yet another aspect of the present disclosure relates to a delivery support system that supports a delivery person in a task of delivering a delivery item to a delivery destination.

The delivery support system includes a delivery support device and a delivery support server.

The delivery support device is configured to notify, to outside, a delivery completion notification indicating that the delivery is complete, which is based on analysis of voice data of a conversation between the delivery person and a customer at the delivery destination or a delivery person's utterance during delivery of the delivery item, and time information including a completion time of delivery of the delivery item acquired based on information on time of the voice data and/or a gap between the completion time of delivery and a scheduled time of delivery.

The delivery support server is configured to receive the delivery completion notification and the time information notified from the delivery support device, and to register delivery-completed item information to a database, by linking the delivery completion notification and the time information.

Such a configuration improves delivery task by eliminating the need for the delivery person to manually provide a delivery completion notification. It also enables the completion of delivery and a status of delivery regarding the delivery item to be accurately grasped.
(d) Still yet another aspect of the present disclosure relates to a delivery support method that supports a delivery person in a task of delivering a delivery item to a delivery destination.

The delivery support method analyzes voice data of a conversation between the delivery person and a customer at the delivery destination or the delivery person's utterance during the delivery of the delivery item, to recognize that the delivery of the delivery item is complete, and notifies, to a predetermined notification target, that the delivery of the delivery item is complete when it is recognized that the delivery of the delivery item is complete.

Such a configuration enables omission of the delivery completion notification that is manually provided by the delivery person, thereby improving the delivery task.
(e) Still yet another aspect of the present disclosure relates to a program that can be used in a computer of a device that supports a delivery person in a task of delivering a delivery item to a delivery destination.

The program enables the computer to analyze voice data of a conversation between the delivery person and a customer at a delivery destination or the delivery person's utterance during delivery of a delivery item, to recognize that the delivery of the delivery item is complete, and to notify, to a predetermined notification target, that the delivery of the delivery item is complete, when it is recognized that the delivery of the delivery item is complete.

Such a configuration improves the delivery task by enabling omission of the delivery completion notification manually provided by the delivery person.
(f) Still yet another aspect of the present disclosure relates to a delivery support method that supports a delivery person in a task of delivering a delivery item to a delivery destination.

In the delivery support method, a delivery completion notification indicating that the delivery of the delivery item is complete, which is based on an analysis of voice data of a conversation between the delivery person and a customer of the delivery destination or the delivery person's utterance, which is made during the delivery of a delivery item, and time information including a completion time of the delivery of the delivery item acquired based on information on time of the voice data, and/or a gap between the completion time of delivery and a scheduled time of delivery, are received from an outside. Then, the delivery completion notification and the time information are linked as delivery-completed item information, and the information is registered to a database.

Such a configuration enables the completion of delivery of the delivery item and a status of delivery regarding the delivery item to be accurately grasped.
(g) Still yet another aspect of the present disclosure relates to a program that can be used on a server computer to support a delivery person in a task of delivering a delivery item to a delivery destination.

The program enables the computer to receive from an outside a delivery completion notification indicating that the delivery of the delivery item is complete, which is based on the analysis of voice data of a conversation between the delivery person and the customer to whom the delivery is made or the delivery person's utterance, and time information acquired based on the time information in the voice data, including the completion time of delivery of the delivery item and/or the gap between the completion time of delivery and the scheduled time of delivery. Further, the delivery completion notification and time information can be linked and registered to the database, as delivery-completed item information.

Such a configuration enables the completion of delivery of the delivery item and a status of delivery regarding the delivery item to be accurately grasped.
(h) Still yet another aspect of the present disclosure relates to a delivery support device that supports a delivery person in a task of pickup of a delivery item from a delivery item sender.

The delivery support device includes a pickup completion recognition unit and a pickup completion notification unit.

The pickup completion recognition unit is configured to analyze voice data of a conversation between the delivery person and a customer of the delivery item sender or a delivery person's speech when picking up the delivery item, and to recognize that a pickup of the delivery item is complete.

The pickup completion notification unit is configured to notify a predetermined notification target that a pickup of the delivery item is complete when it is recognized by the pickup completion recognition unit that the pickup of the delivery item is complete.

Such a configuration can improve the delivery task. In other words, the present disclosure analyzes the voice data of the conversation between the delivery person and the customer of the delivery item sender or the delivery person's utterance when picking up the delivery item, and when it is recognized that a pickup of the delivery item is complete, notifies a predetermined notification target (for example, a delivery support server or the like) that the pickup of the delivery item is complete.

Therefore, when the pickup is complete, a manual operation of a terminal or the like by the delivery person to register the completion of pickup to a delivery support server, or the like is omissible, which was required in the past. Thus, the burden on the delivery task is reducible, exerting an effect of smooth pickup (i.e., improvement of the efficiency of the delivery task).

Further, forgetting to register by the delivery person is suppressible, thereby enabling a securer pickup time registration (i.e., a pickup completion time) to the delivery support server, or the like when a pickup time of receiving the delivery item is registered thereto or the like. Further, forgetting to register by the delivery person is suppressible, thereby suppressing an occurrence of the extra man-hours for a follow up on the completion of the pickup.

### BRIEF DESCRIPTION OF THE DRAWINGS

FIG. 1 is a view showing a delivery support system in a first embodiment.
FIG. 2 is a block diagram functionally showing an in-vehicle process unit in a first embodiment.
FIG. 3 is a block diagram showing a hardware configuration in a vehicle in the first embodiment.
FIG. 4 is a flowchart showing processing on an in-vehicle device side regarding a process 1 in the first embodiment.
FIG. 5 is a flowchart showing a server-side processing regarding the process 1 in the first embodiment.
FIG. 6 is a flowchart showing a process 2 in the first embodiment.
FIG. 7 is a flowchart showing a process 3 in the first embodiment.
FIG. 8 is a view showing a delivery support system in a second embodiment.
FIG. 9 is a block diagram showing a configuration of an information terminal in the second embodiment.
FIG. 10 is a flowchart showing processing in the second embodiment.
FIG. 11 is a view showing a delivery support system in a third embodiment.
FIG. 12 is a flowchart showing processing in the third embodiment.
FIG. 13 is a block diagram functionally showing an in-vehicle process unit in a fourth embodiment.
FIG. 14 is a flowchart showing a process 1B on an in-vehicle device side in the fourth embodiment.
FIG. 15 is a flowchart showing a process 1B on a server side in the fourth embodiment.
FIG. 16 is a flowchart showing a process 2B in the fourth embodiment.
FIG. 17 is a flowchart showing a process 3B in the fourth embodiment.
FIG. 18 is a flowchart showing a process 4B in the fourth embodiment.
FIG. 19 is a flowchart showing a process 5B in the fourth embodiment.

### DESCRIPTION OF EMBODIMENTS

The following describes embodiments of the present disclosure with reference to the drawings.

### [1. First Embodiment]

The first embodiment describes a technology that can improve the efficiency of delivery task when delivering packages and other delivery items to delivery destinations.

### [1-1. overall configuration]

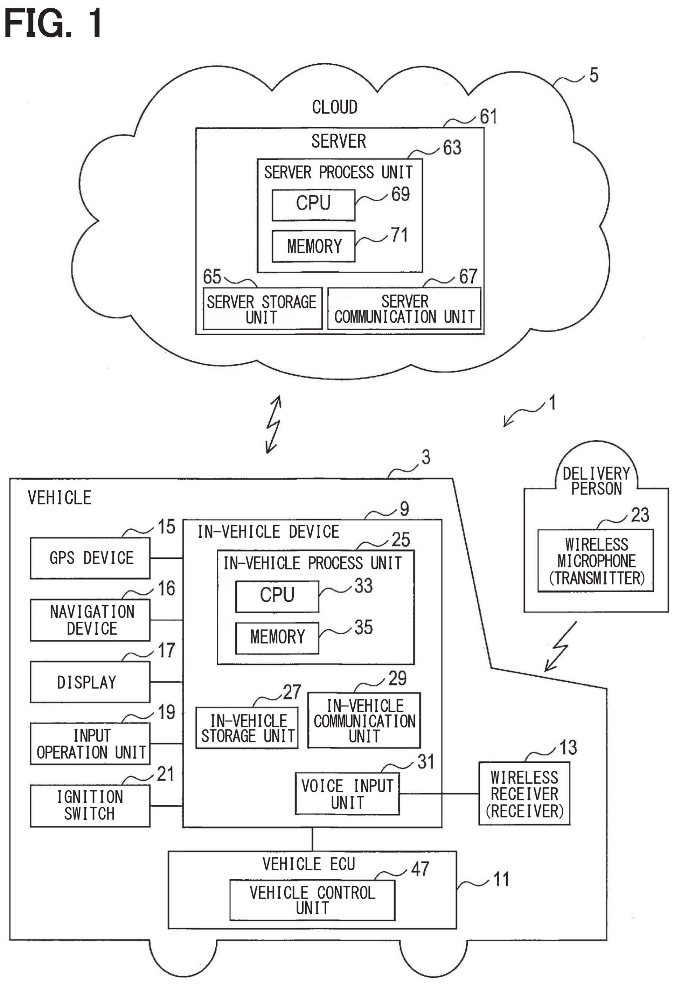

As shown in FIG. 1, a delivery support system 1 of the first embodiment consists primarily of a device mounted on a vehicle 3, a device used for a cloud 5, and a device held by a delivery person.

The configuration of the delivery support system 1 is described in the following.

### [1-1-1. Device on vehicle side]

The vehicle 3 includes an in-vehicle device 9, a vehicle ECU 11, a wireless receiver 13, a GPS device 15, a navigation device 16, a display 17, an input operation unit 19, an ignition switch 21, and the like. ECU is an abbreviation for Electronic Control Unit.

The wireless receiver 13 is a receiver that receives voice (i.e., voice signals) transmitted wirelessly from a wireless microphone 23 held by the delivery person.

The GPS device 15 is a well-known device capable of detecting a position of a subject vehicle. GPS is an abbreviation for Global Positioning System.

The navigation device 16 is a well-known device that can provide directions on a map using GPS information, and the like. Note that the navigation device 16 can display a map on the display 17, as well as of the vehicle 3 and positions of a delivery item sender, a delivery destination and the like.

The display 17 is a well-known display device capable of displaying various images and text. On the display 17, based on information from the GPS device 15, the navigation device 16 can display map information showing a position of the vehicle (i.e., a subject vehicle) 3, or the like on a map. The position of the delivery destination can also be displayed on a map. Further, it is possible to display information on the delivery item (e.g., information such as a delivery number that identifies the delivery item) in text, or the like.

The input operation unit 19 is a well-known device such as a button that enables the delivery person to manually input various types of information. The touch panel configuration of the display 17 can be employed as the input operation unit 19.

An ignition switch 21 is a well-known switch that starts and stops an engine. Instead of the ignition switch 21, a well-known power switch may be employed to start and stop the use of a drive power of the vehicle 3, such as a motor.

### <In-vehicle device>

The in-vehicle device 9 is an electronic process unit (i.e., a device corresponding to a delivery support device) that can be mounted on the vehicle 3, for example by retrofitting, and is connected to the vehicle ECU 11 data exchange.

The in-vehicle device 9 includes an in-vehicle process unit 25 that processes various calculations related to the operation of the in-vehicle device 9 and the like, an in-vehicle storage unit 27 that stores data related to the delivery of delivery items, and the like, an in-vehicle communication unit 29 that communicates with the server 61, and a voice input unit 31 that acquires voice data received at the vehicle ECU 11. The vehicle ECU 11 includes a voice input unit 31 to acquire voice data received by the wireless receiver 13.

In the in-vehicle storage unit 27, various data related to delivery of delivery items are stored (i.e., registered) in a database, in a manner linked to the delivery items. Further, the voice data at the time of delivery may also be stored, in a manner linked to the delivery items.

The information stored in the database of the in-vehicle storage unit 27 includes basic information on a delivery item, as shown in the following as (a) to (d). The information is information sent from the server 61 and stored therein.
(a) "Delivery number": The "delivery number" is a number assigned to each delivery destination based on a delivery plan.
(b) "Vehicle identification information": The "vehicle identification information" includes a VIN (i.e., Vehicle Identification Number) and information on a vehicle's license plate.
(c) "Delivery person identification information": The "delivery person identification information" includes a delivery person's ID (i.e., delivery person identification number), a delivery person's name, and the like.
(d) "Package identification information": The "package identification information" includes an ID (i.e., package identification number) that identifies a package (i.e., delivery item), a store from which the package was shipped, a goods name, a quantity of the package, and the like.

The basic information may further include, for example, an estimated time of delivery of the delivery item to the destination and the like.

Further to the basic information described above, data for a "delivery completion notification" sent from the in-vehicle device 9 to the server 61 is also stored. "Delivery completion notification" is a notification indicating that a delivery is complete, and the contents of the "delivery completion notification" include the following data in (e) to (i).
(e) "Delivery number"
(f) "Completion of Delivery"
(g) "Time of a conversation with a customer at a time of delivery (i.e., at a delivery time)" or "Time of a delivery person's utterance at a time of delivery".
(h) "GPS information of a vehicle's (e.g., an automobile) stop position before or after a completion of delivery." The time before and after completion of delivery includes a predetermined period of time before or after the time of when the vehicle 3 stopped. Further, a most recent stop position of the vehicle 3 before or after the time when the completion of delivery is grasped (e.g., the time when the delivery completion notification is received) can then be notified as information on the delivered item. Also, the stop position is a position at a time when the ignition switch 21 is turned off. Note that, even when the ignition switch 21 is turned off, the in-vehicle device 9 is supplied with an electric power necessary for preset operations, which enables storage, transmission and the like of the time when the ignition switch 21 is turned off.
(i) " Delivery completion notification (i.e., automatic notification) performed based on a result of voice analysis" The in-vehicle process unit 25 is mainly composed of a microcomputer having a CPU 33 and a semiconductor memory such as ROM and RAM (i.e., a memory 35 in the following description).

The various functions of the in-vehicle process unit 25 are realized by the CPU 33 executing a program stored in a non-transitory, tangible storage medium. In an example, the memory 35 corresponds to a non-transitory, tangible storage medium that stores the program. By executing the program, a method corresponding to the program is performed.

The number of microcomputers that configure the in-vehicle process unit 25 may be one or more. The method of realizing the various functions of the in-vehicle process unit 25 is not limited to software, but may be realized using one or more hardware devices for some or all of elements of the functions. For example, when the above-described functions are realized by an electronic circuit, which is hardware, the electronic circuit may be provided by a digital circuit including large number of logic circuits, an analog circuit, or a combination of the digital circuit and the analog circuit.

The following is an explanation of the processing contents performed in the in-vehicle process unit 25.

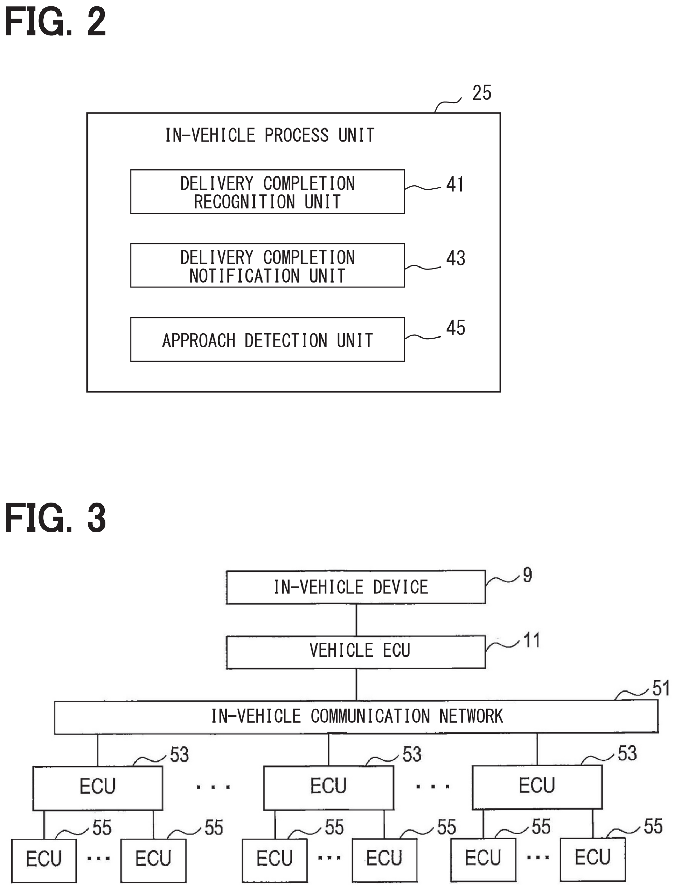

As shown in FIG. 2, the in-vehicle process unit 25 functionally has a delivery completion recognition unit 41, a delivery completion notification unit 43, and an approach detection unit 45. The approach detection unit 45 may be omitted.

The delivery completion recognition unit 41 is configured (i) to analyze the voice data of the conversation between the delivery person and the customer at the delivery destination or the delivery person's utterance, which takes place during delivery of a delivery item, and (ii) to recognize that the delivery is complete.

The delivery completion notification unit 43 is configured to notify a predetermined notification target (e.g., the server 61) that the delivery of a delivery item is complete when the delivery completion recognition unit 41 recognizes that the delivery is complete.

The approach detection unit 45 is configured to detect when a delivery person approaches a delivery destination based on a predetermined determination condition (e.g., a distance to the delivery destination).

### <Vehicle ECU>

Returning description to FIG. 1, the vehicle ECU 11 is an electronic control unit that controls the operation of the vehicle 3, and is communicatively connected to the in-vehicle device 9. The vehicle ECU 11 has a vehicle control unit 47 that processes various calculations related to the control of the operation of the vehicle 3. The vehicle control unit 47 is composed mainly of a microcomputer having a CPU and a memory such as ROM, RAM, a flash memory, and the like, as is well known, although not shown in the drawing.

The configuration, hardware, and the like, for implementing the various functions of the vehicle control unit 47 is the same as that of the in-vehicle process unit 25 described above.

The hardware configuration in the vehicle 3 that is connected to the vehicle ECU 11 is explained in the following.

As shown in FIG. 3, in the vehicle 3, the vehicle ECU 11 connected to the in-vehicle device 9 is connected to a plurality of ECUs 53 and other components by an in-vehicle communication network 51 for communication within the vehicle. Each of the ECUs 53 is connected to other ECUs 55 for communication.

The vehicle ECU 11 can realize well-coordinated control of the vehicle 3 as a whole by supervising multiple ECUs 53. Each of the ECUs 53, for example, is provided for each of domains classified by functions in the vehicle 3, and can primarily perform a control of a plurality of the ECUs 55 in the respective domains. The domain is set, for example, as a power train domain, a body domain, a chassis domain, a cockpit domain, and the like. The ECU 55 is, for example, an ECU that controls sensors and actuators.

### [1-1-2. Device on cloud side]

Returning to FIG. 1, the cloud 5 includes a server (i.e., a device corresponding to a delivery support server) 61 as a device for performing various operations in the cloud 5.

The server 61 includes a server process unit 63 that processes various calculations related to the operation of the server 61, or the like, a server storage unit 65 that stores data related to delivery, voice data and the like, and a server communication unit 67 that communicates with devices outside the cloud 5, such as the in-vehicle device 9.

The server process unit 63 is mainly composed of a microcomputer having a CPU 69 and a memory 71 such as ROM and RAM.

Various functions of the server process unit 63 are the same as the various functions of the in-vehicle process unit 25 described above. In other words, the various functions of the server process unit 63 are realized by the CPU 69 executing a program stored in a non-transitory, tangible storage medium. The number of microcomputers comprising the server process unit 63 may be one or more.

Further, the method of realizing the various functions of the server process unit 63 is not limited to software, but may be realized using one or more hardware devices for some or all of its elements. For example, if the above-described functions are realized by electronic circuits, which are hardware, the electronic circuits may be digital circuits including many logic circuits, or analog circuits, or a combination thereof.

In the server storage unit 65, as in the in-vehicle storage unit 27, various data related to delivery of delivery items and the like are stored (i.e., registered) in a database, in a manner linked to each of the delivery items. Further, the voice data at the time of delivery may also be stored, in a manner linked to the delivery item.

That is, the information stored in the database of the server storage unit 65 includes basic information on a delivery item, as described above in (a) to (d), similar to the information stored in the in-vehicle storage unit 27. The information is transmitted from the server 61 to the in-vehicle device 9.

Further to the basic information described above, (((the information stored in the database of))) the server storage unit 65 includes the data of the "delivery completion notification" sent from the in-vehicle device 9 to the server 61, i.e., the data of (e) to (i) described above.

### <Process performed by a server >

The server 61 primarily performs the following processes.
- "Process related to delivery plan" The administrator (e.g., the manager) who manages the delivery makes a plan regarding who will be in charge and which one of the vehicles 3 is usable to make a delivery, or the like, according to a delivery status of delivery items and the resources of the delivery person and the vehicle 3, and inputs the plan to the server 61. The server 61 performs various processes related to delivery according to a delivery plan.
- "Delivery status management process" The server 61 manages the delivery status. For example, the pickup of the delivery item and the status up to the completion of delivery are managed according to vehicle information (e.g., information from the GPS device 15, information on the state of the ignition switch 21, the state of the vehicle 3 such as a travel speed, and the like), a delivery completion notification and the like.
- "Process of data analysis" From the delivery status data, the server 61 analyzes a delivery speed of the delivery person, a time from pickup of the delivery item from the delivery item sender to the delivery destination, or the like, and feeds the information back into the delivery plan.

### [1-1-3. Device held by delivery person]

A device held by the delivery person is a wireless microphone 23.

The wireless microphone 23 is a microphone that acquires voice of conversation between the delivery person and the customer to whom the delivery is made, the delivery person's utterance, and the like. The wireless microphone 23 can transmit the acquired voice signal wirelessly to the wireless receiver 13.

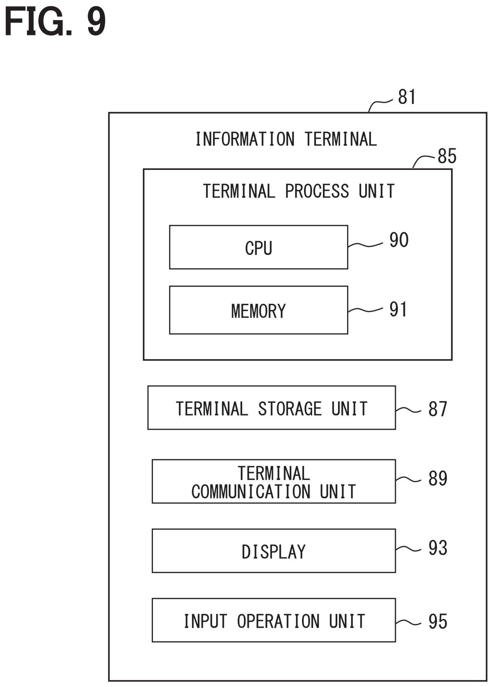

The delivery person may also hold an information terminal 81 (see, for example, FIG. 9), as described in the following. The information terminal 81 is a device that can receive and store information on the delivery item from an outside (e.g., the server 61), displays such information, or the like, and also enables manual input of the information. The information terminal 81 will be discussed in more detail later.

### [1-2. Delivery procedure]

The following is an outline of the delivery procedure regarding delivery of the delivery item in the first embodiment.

The delivery person boards the vehicle 3 having a driving power such as an automobile to deliver the delivery item. The vehicle 3 without driving power such as a bicycle may also be used.

The delivery person has the wireless microphone 23 put thereon. The delivery person may also carry the information terminal 81, which stores information such as the delivery destination of the delivery item or the like.

The in-vehicle device 9 stores information on the delivery destination (e.g., a map showing the position of the delivery destination, the name and address of the customer at the delivery destination, or the like), contents of which is displayed on the display 17, or the like, allowing the delivery person to see the displayed information and to drive the vehicle 3 to the delivery destination. The information terminal 81 may also display information on the delivery destination.

Upon arrival at the delivery destination, the delivery person turns off the ignition switch 21 of the vehicle 3, exits the vehicle 3, and heads to the delivery destination (e.g., a house to which the delivery is made) with the delivery item.

The fact that the delivery person has reached the delivery destination can be determined from information acquired by the GPS device 15, i.e., the position on the map of the vehicle 3 and the position on the map of the delivery destination. For example, if a distance between the position of the vehicle 3 and the position on the map of the delivery destination is less than a predetermined value, it can be determined that the delivery person has reached the delivery destination.

Also, the delivery person may be considered to have reached the delivery destination when the ignition switch 21 of the vehicle 3 is turned off in a situation where the above-described distance is equal to or shorter than a predetermined value.

Thus, the time (i.e., a period of time) when the delivery person delivers the delivery item may be, for example, determined as the period of time from "a time when the ignition switch 21 of the vehicle 3 is turned off in a situation where the distance is equal to or shorter than a predetermined value" to "a time when the ignition switch 21 is turned on."

Note that when the information terminal 81 includes the GPS device 15, or the like, the position of the information terminal 81 may be used instead of the position of the vehicle 3.

Then, the in-vehicle device 9 recognizes the completion of delivery from the conversation between the delivery person and the customer or from the delivery person's utterance when the delivery person delivers the delivery item, and when the in-vehicle device 9 recognizes the completion of delivery, the in-vehicle device 9 notifies the server 61 of the completion of delivery.

The completion time of a delivery may also be grasped based on information on the time of the voice acquired at the time of delivery (e.g., the time of acquisition of the voice used to recognize the completion of delivery). Further, time information, including the completion time of delivery and/or the gap between the completion time of delivery and the scheduled time of delivery, may be notified to the server 61 as information on the delivery item.

Also, the most recent stop position of the vehicle 3 before or after the time when the completion of delivery was grasped, e.g., the position when the ignition switch 21 was turned off at a stop or when the ignition switch 21 was turned on at a start, may be notified to the server 61 as information on the delivery item.

### [1-3. Control process]

The following is an explanation of the process performed in the first embodiment.

### [1-3-1. Process (Process example 1)]

### <In-vehicle device process>

The process of the in-vehicle process unit 25 in the in-vehicle device 9 is to recognize the delivery completion from the voice and to notify the server 61 of the recognition result.

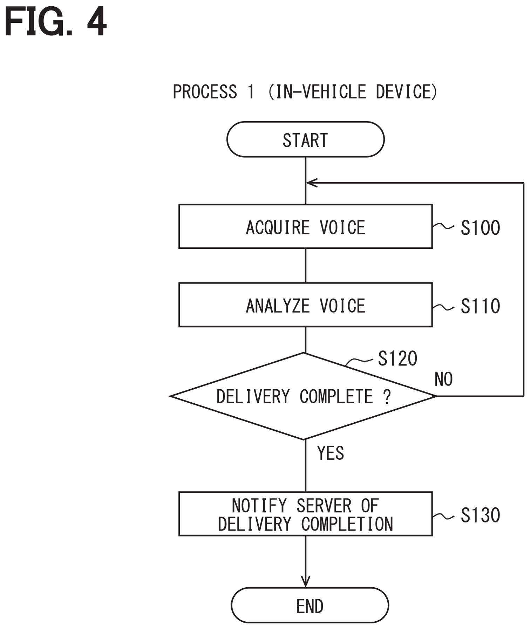

As shown in the flowchart in FIG. 4, in step (hereinafter designated as S) 100, the in-vehicle process unit 25 performs a process of acquiring voice. Specifically, a signal (i.e., voice data) of voice transmitted from the wireless microphone 23 to the wireless receiver 13 is acquired via the voice input unit 31. In other words, the process acquires voice data of conversation between the delivery person and the customer of delivery destination when the delivery was made, as well as voice data of the delivery person's utterances when the delivery was made.

Subsequently in S110, a voice analysis process is performed. The voice analysis process is a process of extracting words and sentences from sounds acquired through conversation or utterance, using well-known voice recognition, and recognizing the meaning of the sentences using natural language processing.

When performing voice recognition, the delivery person's voice may be recorded in advance to improve the accuracy of recognizing the delivery person's words, and the pronunciation, intonation, and pitch of the voice may be learned. The learning data may then be used to identify whether the voice is that of the delivery person by comparing the data with the sound acquired from the wireless microphone 23.

Subsequently in S120, the voice analysis conducted in S110 (e.g., analysis using the learning described above) determines whether the delivery is complete or not. When an affirmative determination is made here, the process proceeds to S130, and when a negative determination is made, the process returns to S100.

In other words, when the voice analysis described above recognizes from the voice "the delivery is complete," it is determined that the delivery is complete.

For example, a model to distinguish whether a delivery is complete or not is made by machine learning, such as deep learning, or the like, which uses a large amount of voice data of conversation between the delivery person and the customer in delivery complete cases and in delivery not complete cases. The model may then be used to distinguish a situation when the delivery is complete from the conversation actually acquired, and, the delivery may be considered as complete when it is determined that the delivery is complete.

Examples of using machine learning to recognize the completion of delivery from conversation include the delivery person's words, "Are you sure the item is the one you ordered ?" and the customer's words, "There is no mistake."

It is also possible to set a rule that a fixed word is uttered to the delivery person when the delivery is complete, and when that word is detected using voice recognition from the acquired voice data, the delivery may be considered as complete.

The fixed word may include, for example, "Thank you for using delivery," "We look forward to seeing you again," and the like.

In S130, the server 61 is notified that the delivery is complete, then a cycle of the process ends.

### <Server process>

The process of the server process unit 63 in the server 61 is a process of sending the delivery completion notification from the in-vehicle device 9.

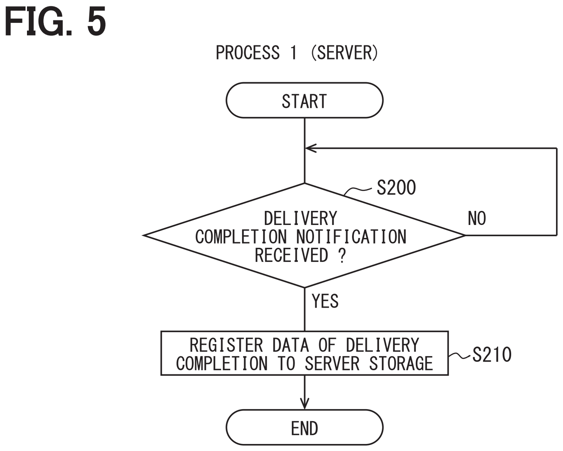

As shown in the flowchart in FIG. 5, the server process unit 63 determines in S200 whether it has received a delivery completion notification from the in-vehicle device 9. When a positive determination is made here, the process proceeds to S210, and when a negative determination is made, the process stands by.

In S210, the data of the above-mentioned delivery completion notification is stored (i.e., registered) in the server storage unit 65.

Further, when time information is received from the in-vehicle device 9, including the completion time of delivery and/or the gap between the completion time of delivery and the scheduled time of delivery, the time information is stored in the server storage unit 65. Further, when information distinguishing whether the delivery completion notification was input automatically or manually, as described in the following, is received from the in-vehicle device 9 or the information terminal 81, the information distinguishing which of manual or automatic input is used is stored in the server storage unit 65, further to the delivery completion notification.

Then, a cycle of the process ends.

### [1-3-2. Process (Process example 2)]

In a process example 2 of the in-vehicle process unit 25, further to the process of the process example 1, a process is added to determine whether the vehicle 3 has approached the delivery destination using the position information from the GPS device 15, i.e., whether it is a timing of delivery (i.e., of acquiring voice).

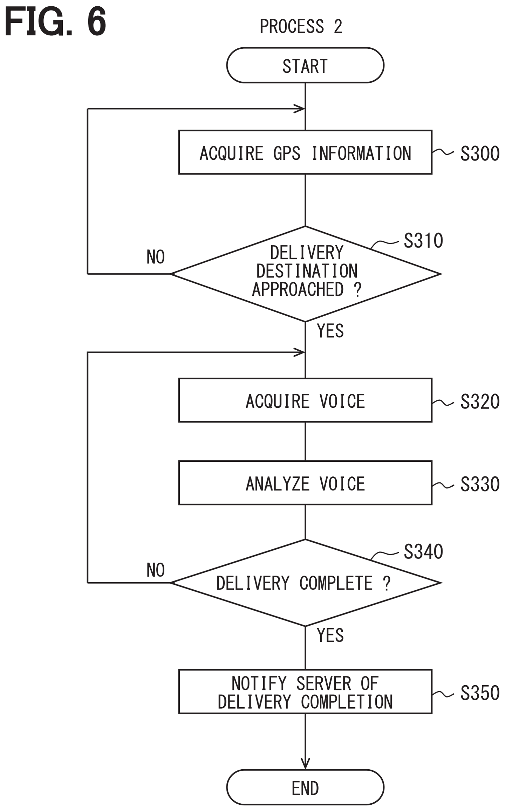

As shown in the flowchart in FIG. 6, in S300, the GPS information is acquired from the GPS device 15. Specifically, the position information of the vehicle 3 is acquired.

Subsequently in S310, based on the position information of the vehicle 3 and the position information of the delivery destination, it is determined whether or not the vehicle 3 has approached the delivery destination. When a positive determination is made here, the process proceeds to S320, and when a negative determination is made, the process returns to S300. For example, when a distance between the position of the vehicle 3 and the delivery destination is equal to less than a predetermined value, it can be determined that the vehicle 3 has approached the delivery destination.

In S320, the process of acquiring voice is performed in the same way as in S100 of the above-described process example 1.

Subsequently in S330, the voice analysis process is performed in the same way as in S110 of the above-described process example 1.

Subsequently in S340, as in S120 of the above-described process example 1, it is determined whether the delivery is complete or not. When a positive determination is made here, the process proceeds to S350, and when a negative determination is made, the process returns to S320.

In S350, as in S130 of the above-described process example 1, the server 61 is notified that the delivery is complete, then a cycle of the process ends.

The process in the server process unit 63 is the same as in the above-described process example 1.

### [1-3-3. Process (Process example 3)]

In the process example 3 of the in-vehicle process unit 25, the process content of the process example 2 has an additional process that uses the information from the ignition switch 21 to determine whether it is a timing of delivery (i.e., of acquiring voice).

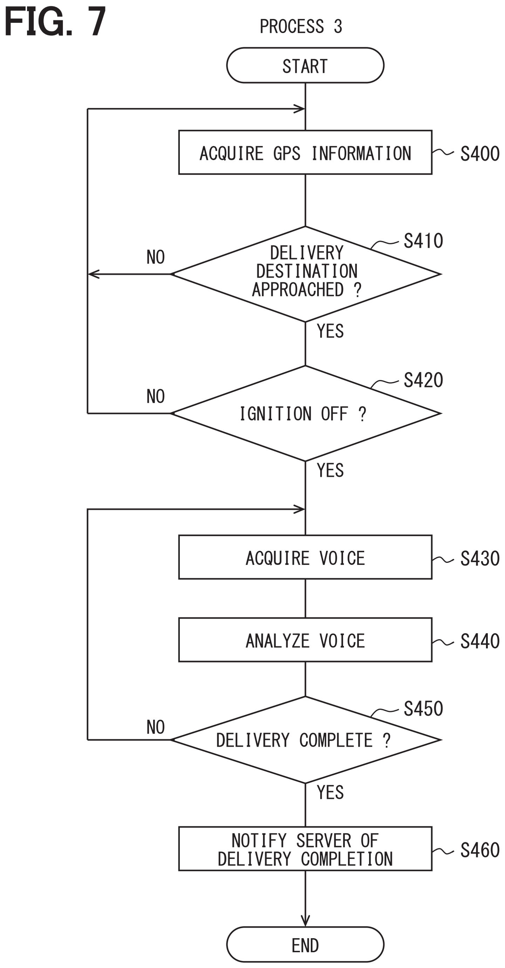

As shown in the flowchart in FIG. 7, in S400, the GPS information is acquired from the GPS device 15, as in S300 of the above-described process example 2.

Subsequently in S410, similar to S310 in the above-described process example 2, based on the position information of the vehicle 3 and the position information of the delivery destination, it is determined whether or not the vehicle 3 has approached the delivery destination. When a positive determination is made here, the process proceeds to S420, and when a negative determination is made, the process returns to S400.

In S420, it is determined whether the ignition switch 21 is off (i.e., being turned OFF). When a positive determination is made here, the process proceeds to S430, and when a negative determination is made, the process returns to S400.

In other words, when the vehicle 3 has approached the delivery destination and the ignition switch 21 is off, the process proceeds to S430, determining that it is a timing of delivery (i.e., of acquiring voice).

In S430, the process of acquiring voice is performed in the same way as in S320 of the above-described process example 2.

Subsequently in S440, a voice analysis process is performed in the same way as in S330 of the above-described process example 2.

Subsequently in S450, as in S340 of the above-described process example 2, it is determined whether the delivery is complete or not. When a positive determination is made here, the process proceeds to S460, and when a negative determination is made, the process returns to S430.

In S460, as in S350 of the above-described process example 2, the server 61 is notified that the delivery is complete, then a cycle of the process ends.

Note that the process in the server process unit 63 is the same as in the above-described process example 2.

### [1-4. Effects]

According to the first embodiment, the following effects are achievable.

(1a) The first embodiment improves delivery tasks. In other words, the first embodiment analyzes the voice data of the conversation between the delivery person and the customer at the delivery destination or the delivery person's utterance during delivery of the delivery item, and when it is recognized that the delivery of the delivery item is complete, the server 61 is notified that the delivery is complete.

Therefore, when a delivery is complete, a conventional operation by the delivery person is omissible, which has been required for manually registering the completion of delivery to the server 61 from the terminal or the like. Thus, the burden on the delivery task is reducible, exerting an effect of smooth delivery (i.e., improving the efficiency of the delivery task).

Further, since forgetting to register the delivery (i.e., the time when the delivery was complete) by the delivery person is suppressible, the delivery time can be more reliably registered to the server 61 in case that the registering the delivery time (i.e., the time when the delivery was complete) with the server 61 is required. Further, forgetting to register by the delivery person is suppressible, thereby suppressing an occurrence of the extra man-hours for a follow up on the completion of delivery.

(1b) In the first embodiment, the completion time of delivery can be grasped based on information on the time of the voice data (i.e., the voice data indicating the completion of delivery). Further, the time information, including the completion time of delivery and/or the gap between the completion time of delivery and the scheduled time of delivery, can be notified to the server 61 as information on the delivery item. In such manner, the accuracy of the delivery plan, or the like is improvable.

(1c) In the first embodiment, the most recent stop position of the vehicle 3 before or after the time when the completion of delivery is grasped can be notified to the server 61 as information on the delivery item.

(1d) In the first embodiment, the approach of the delivery person to the delivery destination can be detected by a predetermined determination condition (e.g., position information by the GPS device 15 or the state of the ignition switch 21). Further, it can also be configured to acquire voice when it is detected that the delivery person has approached the delivery destination.

In other words, it can be configured to acquire voice when necessary (i.e., at the time of delivery), rather than always acquiring voice. In such manner, consumption of electric power is reducible, and a resource of calculation process capacity is efficiently usable.

### [1-5.Emdobiment-Disclosure relationship]

Next, the relationship between the first embodiment and the present disclosure will be explained.

The delivery support system 1 corresponds to a delivery support system, the vehicle 3 corresponds to a vehicle, the server 61 corresponds to a delivery support server, the in-vehicle device 9 corresponds to a delivery support device, the delivery completion recognition unit 41 corresponds to a delivery completion recognition unit, the delivery completion notification unit 43 corresponds to a delivery completion notification unit, and the approach detection unit 45 corresponds to an approach detection unit.

### [2. Second Embodiment]

Since the basic configuration of the second embodiment is similar to that of the first embodiment, the differences from the first embodiment will be mainly described in the following. The same reference signs as in the first embodiment denote the same elements or components, and reference is made to the preceding description.

The second embodiment describes the process of using the information terminal 81 when the delivery person carries the information terminal 81.

### [2-1. Configuration]

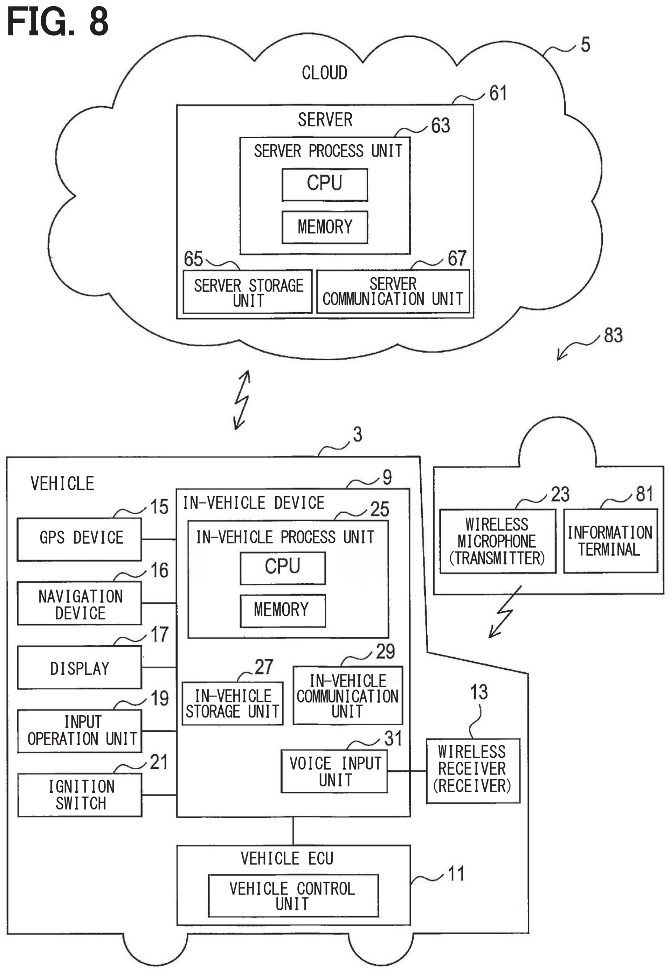

The hardware configuration of a delivery support system 83 of the second embodiment is shown in FIG. 8. Basically, as in the first embodiment, the system has a configuration on a vehicle 3 side, on a cloud 5 side, and on a delivery person side.

The cloud 5, as in the first embodiment, includes the server 61, which has the server process unit 63, the server storage unit 65, and the server communication unit 67.

As in the first embodiment, the vehicle 3 includes the in-vehicle device 9, the vehicle ECU 11, the wireless receiver 13, the GPS device 15, the navigation device 16, the display 17, the input operation unit 19, the ignition switch 21, and the like.

The in-vehicle device 9 includes the in-vehicle process unit 25, the in-vehicle storage unit 27, the in-vehicle communication unit 29, the voice input unit 31, and the like, as in the first embodiment.

The delivery person wears the wireless microphone 23 similar to the first embodiment.

In particular, in the second embodiment, the delivery person carries the information terminal 81. Note that the information terminal 81 can be a dedicated terminal specialized for the delivery task or a tablet terminal, but the well-known information terminal 81 such as a smartphone or the like can also be used.

As shown in FIG. 9, the information terminal 81 includes a terminal process unit 85 that processes various calculations related to the operation of the information terminal 81 and the like, a terminal storage unit 87 that stores data related to delivery and the like, a terminal communication unit 89 that communicates with the outside (for example, with the in-vehicle device 9 or the server 61), a display 93, an input operation unit 95, and the like.

The terminal process unit 85 is mainly composed of a microcomputer having a CPU 90 and a memory 91 such as ROM and RAM. The various functions of the terminal process unit 85 are basically the same as the various functions of the in-vehicle process unit 25 described above.

In the terminal storage unit 87, various data (e.g., basic information on the delivery item) sent from the server 61 regarding the delivery of delivery item and the like are stored in a database, in a manner linked to each of the delivery items.

The display 93 can display various information on the delivery item, such as the delivery number and the name and address of the delivery destination.

The input operation unit 95 is a device that enables manual input of the completion of delivery, as described in the following.

When the information terminal 81 includes the GPS device 15 or the navigation device 16, it can determine its own position, thereby displaying its own position, the position of the delivery destination, and the like on the display 93 as map information.

### [2-2. Process]

Next, we will explain the process performed by using the in-vehicle device 9, the server 61, and the information terminal 81, and the like.

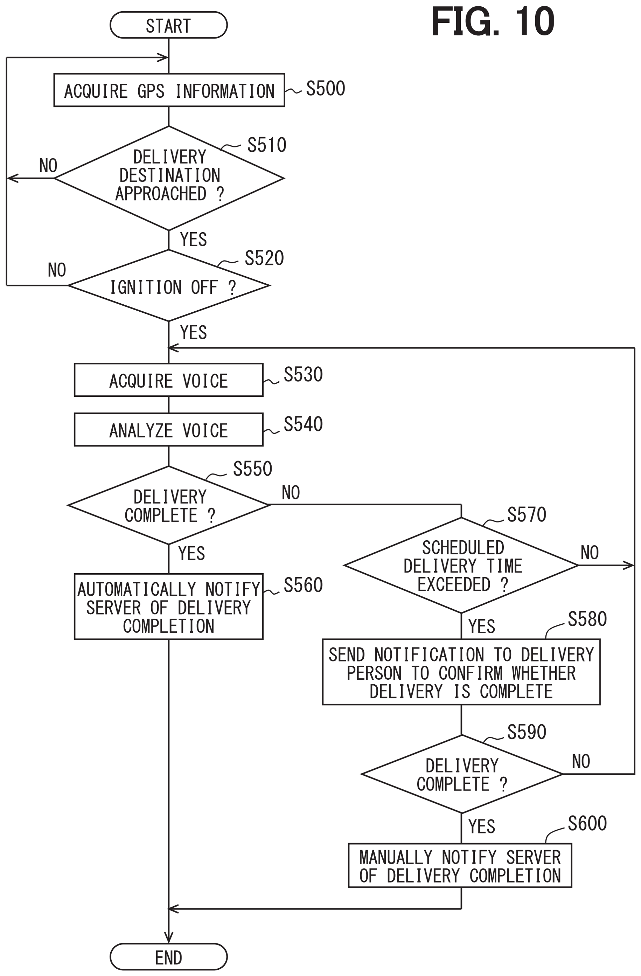

The processes from S500 to S560 in the flowchart in FIG. 10 are the processes performed by the in-vehicle device 9, the processes in S570 and S580 described in the following are the processes performed by the server 61, and the processes in S590 and S600 are the processes performed by the information terminal 81.

As shown in FIG. 10, in S500, the GPS information is acquired from the GPS device 15, as in S400 of the above-described process example 3.

Subsequently in S510, similar to S410 in the above-described process example 3, it is determined whether or not the vehicle 3 has approached the delivery destination based on the position information of the vehicle 3 and the position information of the delivery destination. When a positive determination is made here, the process proceeds to S520, and when a negative determination is made, the process returns to S500.

In S520, it is determined whether or not the ignition switch 21 is off. When a positive determination is made here, the process proceeds to S530, and when a negative determination is made, the process returns to S500.

In S530, the process of acquiring voice is performed in the same way as in S430 of the above-described process example 3.

Subsequently in S540, a voice analysis process is performed in the same way as in S440 of the above-described process example 3.

Subsequently in S550, as in S450 of the above-described process example 3, it is determined whether the delivery is complete or not. When a positive determination is made here, the process proceeds to S560, and when a negative determination is made, the process proceeds to S570.

In S560, as in S460 of the above-described process example 3, the server 61 is automatically notified that the delivery is complete, then a cycle of the process ends. Note that, in such case, information indicating that the notification is automatically made is also notified.

Then, in S570, which is subsequent to a negative determination in S550, it is determined whether or not a scheduled delivery time (i.e., an estimated delivery time) set in the delivery plan in advance for a current delivery has been exceeded. When a positive determination is made here, the process proceeds to S580, and when a negative determination is made, the process returns to S530.

Since the server 61 stores the scheduled delivery time set in advance in the delivery plan for each of the delivery items, it is possible to grasp the delivery status of the delivery items depending on whether or not there is a delivery completion notification at the scheduled delivery time, regarding the delivery item to be delivered in the current delivery.

In S580, since an automatic delivery completion notification has not been made even after the scheduled delivery time has passed, the server 61 sends a notification to the information terminal 81 to confirm whether the delivery is complete or not (i.e., a status confirmation notification).

Subsequently in S590, the status confirmation notification sent from the server 61 is displayed on the display 93 of the information terminal 81. For example, a message "Has the delivery of goods with a delivery number ... been complete ?" or the like is displayed. In such manner, the delivery person is prompted to confirm whether the delivery is complete or not. Confirmation may also be prompted by voice or other means. Then, when the delivery is complete, the process proceeds to S600, and when the delivery is not complete, the process returns to S530.

In S600, when the delivery is complete, the delivery person manually notifies the server 61 of the completion of delivery by operating the input operation unit 95, thereafter a cycle of the process ends. Note that, in such case, information indicating that the notification was made manually is also notified.

### [2-3. Effects]

The second embodiment has the same advantages as those of the first embodiment. Further, in the second embodiment, when there is no automatic delivery completion notification even after the scheduled delivery time, the information terminal 81 is notified (i.e., the delivery person is notified) to confirm whether the delivery is complete or not, which has the effect of ensuring a confirmation that the delivery is complete.

Manual input of the above-described "status confirmation notification" and delivery confirmation may also be performed by the in-vehicle device 9.

### [3. Third Embodiment]

Since the basic configuration of the third embodiment is similar to that of the first embodiment, the differences from the first embodiment will be mainly described in the following. The same reference signs as in the first embodiment denote the same elements or components, and reference is made to the preceding description.

The third embodiment describes a delivery support system 101 with a server 61 and an information terminal 81, i.e., a delivery support system 101 that does not use the in-vehicle device 9.

### [3. 1. Configuration]

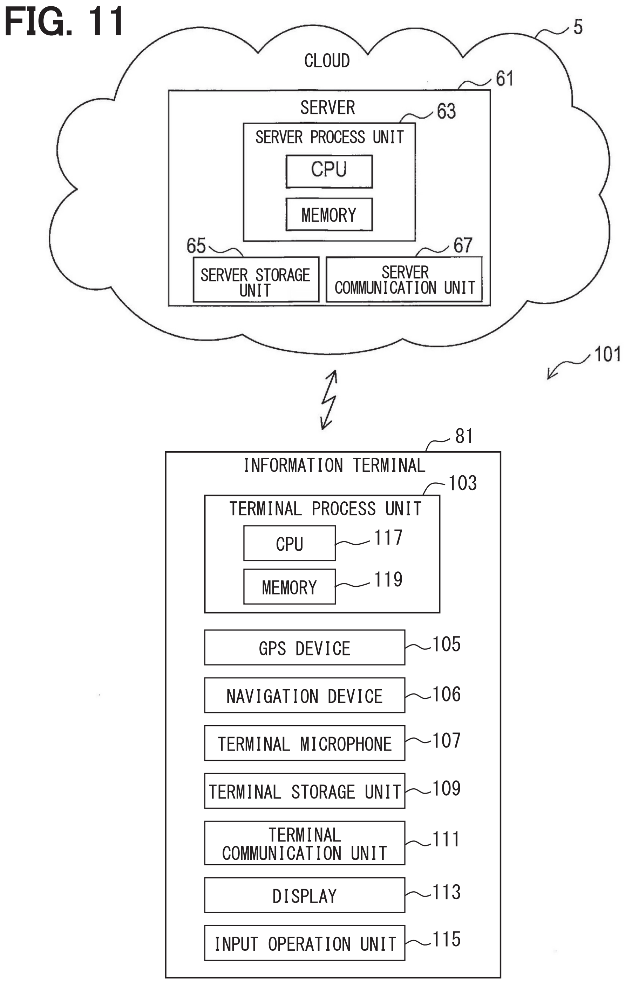

The hardware configuration of the delivery support system 101 of the third embodiment is shown in FIG. 11, which has the same configuration on a cloud 5 side as in the first embodiment and the same configuration of the information terminal 81 on a delivery person side.

The cloud 5, as in the first embodiment, includes the server 61, which has the server process unit 63, the server storage unit 65, and the server communication unit 67. The server communication unit 67 is capable of communicating with the information terminal 81.

The delivery person carries the information terminal 81 but is not wearing the wireless microphone 23. The information terminal 81 can be a smartphone, a tablet terminal, or other device.

The information terminal 81 includes a terminal process unit 103 for processing various calculations related to the operation of the information terminal 81, or the like, a GPS device 105 for detecting the position of the information terminal 81, a navigation device 106, a terminal microphone 107 for acquiring voice, a terminal storage unit 109 for storing data related to delivery, or the like, a terminal communication unit 111 for communicating with the outside (e.g., with the server 61), a display 113, an input operation unit 115, and the like.

The terminal process unit 103 is mainly composed of a microcomputer having a CPU 117 and a memory 119 such as ROM and RAM.

The various functions of the terminal process unit 103 are the same as the various functions of the in-vehicle process unit 25 described above. For example, the voice input from the terminal microphone 107 can be analyzed to recognize the completion of delivery from the conversation between the delivery person and the customer at the time of delivery or from the delivery person's utterance.

In the terminal storage unit 109, various data (e.g., basic information on the delivery item) sent from the server 61 regarding the delivery of delivery item are stored in a database, in a manner linked to each of the delivery items.

The display 113 can show various information on the delivery item, such as the delivery number and the name and address of the delivery destination.

The input operation unit 115 is a device that enables manual input. For example, the completion of delivery can be input manually.

### [3-2. Process]

The process content of the third embodiment is basically the same as that of the first embodiment. In other words, in the first embodiment, the completion of delivery was recognized by voice analysis using the wireless microphone 23, the wireless receiver 13, and the in-vehicle device 9, but in the third embodiment, the completion of delivery is recognized by voice analysis using the information terminal 81 having the terminal microphone 107.

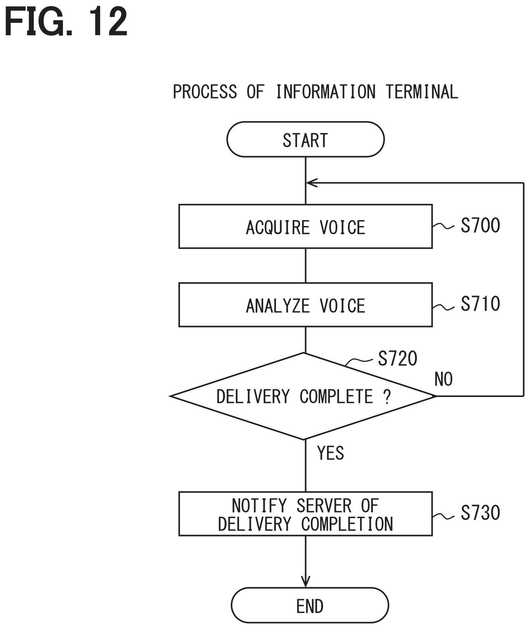

Next, the process of the third embodiment (i.e., the process corresponding to the above-described process 1) is explained using the flowchart in FIG. 12. The contents of the process in FIG. 12 are the same as those in FIG. 4.

First, in S700, voice information is acquired using the terminal microphone 107 of the information terminal 81. In other words, the conversation between the delivery person and the customer at the time of delivery or voice of the delivery person's utterance is input.

Subsequently in S710, voice analysis is performed at the terminal process unit 103 of the information terminal 81.

Subsequently in S720, based on the results of voice analysis, it is determined whether the delivery is complete or not. When a positive determination is made here, the process proceeds to S730, and when a negative determination is made, the process returns to S700.

In S730, the delivery is complete, thereby the information terminal 81 notifies the server 61 that the delivery is complete, then a cycle of the process ends.

As for the other processes of the third embodiment (i.e., the processes corresponding to the process 2 and the process 3 described above), the only difference is whether the completion of delivery is recognized based on voice analysis (a) using the wireless microphone 23, the wireless receiver 13, and the in-vehicle device 9, or (b) using the information terminal 81 having the terminal microphone 107, and explanation of such difference is omitted.

### [3-3. Effects]

The third embodiment has the same advantages as those of the first embodiment. Further, the third embodiment also has the advantage that the configuration of the wireless microphone 23, the wireless receiver 13, and the in-vehicle device 9 can be omitted when the information terminal 81 such as a smartphone is usable.

### [Fourth Embodiment]

A basic configuration of the fourth embodiment is similar to that of the first embodiment, and hence a difference from the first embodiment will be mainly described in the following. The same reference signs as in the first embodiment denote the same elements or components, and reference is made to the preceding description.

In the fourth embodiment, when a delivery person picks up a food or other delivery item from a delivery item sender such as a store, as in the delivery service, the completion of pickup of the delivery item is recognized from the conversation between the delivery person and the customer of the delivery item sender or the delivery person's utterance, which takes place when the delivery item is picked up, almost similarly as in the first to third embodiments.

Since information on the delivery item, such as the delivery item sender and the delivery destination, is transmitted from the server 61 to the in-vehicle device 9 and to the information terminal 81, the delivery person, for example, checks the information on the delivery item sender displayed on the display 113 of the information terminal 81, visits the delivery item sender using the vehicle 3, or the like, and picks up the delivery item from the delivery item sender.

A "at the time of pickup" period, like the "at the time of delivery" period, includes, for example, a period of time for the conversation or the utterance (i) when the distance between the vehicle 3 and the delivery item sender is less than a predetermined value, (ii) when (a) the distance between the two is less than a predetermined value and (b) the ignition switch 21 is turned off, or other similar situations.

### [4-1. Configuration]

The similar delivery support system as in the first through third embodiments can be employed as the delivery support system in the fourth embodiment.

Specifically, in the fourth embodiment, for example, when using the delivery support system 1 of the first embodiment, as shown in FIG. 1 described above, the cloud 5 side device includes the server 61, and the server 61 includes the server process unit 63 and the like. Further, the vehicle 3 side device includes the in-vehicle device 9, the vehicle ECU 11, the wireless receiver 13, and other devices. The delivery person wears the wireless microphone 23.

The following is an explanation of the contents of the process performed in the in-vehicle process unit 25 of the in-vehicle device 9.

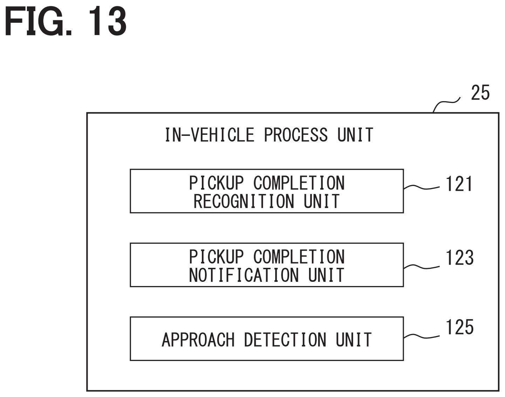

As shown in FIG. 13, the in-vehicle process unit 25 functionally has a pickup completion recognition unit 121, a pickup completion notification unit 123, and an approach detection unit 125. The approach detection unit 125 may be omitted.

The pickup completion recognition unit 121 is configured to analyze the voice data of the conversation between the delivery person and the customer of the delivery item sender or the delivery person's utterance when picking up the delivery item, and to recognize that the pickup of the delivery item is complete.

The pickup completion notification unit 123 is configured to notify a predetermined notification target (e.g., the server 61) that the pickup of the delivery item is complete when the pickup completion recognition unit 121 recognizes that the pickup of the delivery item is complete.

The approach detection unit 125 is configured to detect that the delivery person has approached the delivery item sender based on a predetermined determination condition (e.g., a distance to the delivery item sender).

### [4-2. Process]

Next, the process of the fourth embodiment is described briefly, as it is basically the same as the process in the first through third embodiments, although there is a difference from the process in the first through third embodiments, in terms of whether the situation is the delivery of a delivery item or the picked up thereof.

### [4-2-1. Process (Process 1B corresponding to Process 1)]

This section describes the process of picking up the delivery item using the delivery support system 1 of the first embodiment, using an example corresponding to the process 1 of the first embodiment (i.e., Process 1B).

### <In-vehicle device process>

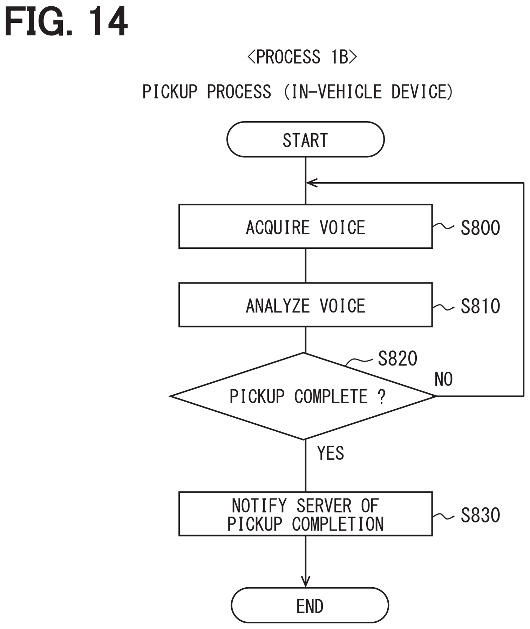

As shown in the flowchart in FIG. 14, in S800, the in-vehicle process unit 25 of the in-vehicle device 9 performs a process to acquire the voice transmitted from the wireless microphone 23. Specifically, the process acquires voice data of the conversation between the delivery person and the customer (i.e., client) of the delivery item sender (e.g., store, or the like) when the delivery item is picked up, or voice data of the delivery person's utterance when picking up the delivery item.

Subsequently in S810, a voice analysis process is performed.

Subsequently in S820, voice analysis is used to determine whether or not the pickup is complete (i.e., pickup is complete). When a positive determination is made here, the process proceeds to S830, and when a negative determination is made, the process returns to S800.

For example, a model to distinguish whether a pickup is complete or not is made by machine learning, such as deep learning, or the like, which uses voice data of conversation between the delivery person and the customer in delivery complete cases and in delivery not complete cases, and such a model is used to distinguish a situation that the pickup is complete, for a determination that the pickup is complete.

Examples of recognizing the completion of pickup from conversation using machine learning include the delivery person's words "I have picked up the goods", the customer's word "please", and the like.

It is also possible to set a rule that a fixed word is uttered to the delivery person when the pickup is complete, and when such word is detected using voice recognition from the acquired voice data, the pickup may be considered as complete.

The above-described fixed words include, for example, "I am going to make a delivery," "I have indeed picked up the goods," and the like.

In S830, the in-vehicle device 9 notifies the server 61 of the completion of pickup, then a cycle of the process ends.

### <Server process>

The process in the server process unit 63 of the server 61 is a process when the in-vehicle device 9 sends a pickup completion notification, regarding completion of pickup.

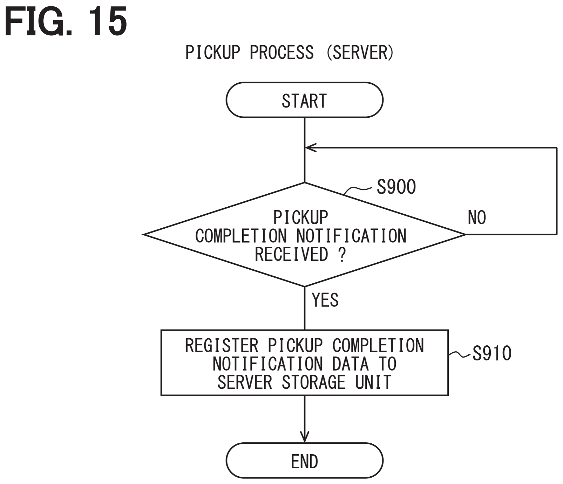

As shown in the flowchart in FIG. 15, the server process unit 63 determines in S900 whether or not it has received a pickup completion notification from the in-vehicle device 9. When a positive determination is made here, the process proceeds to S910, and when a negative determination is made, the process stands by.

In S910, the above-mentioned data of the pickup completion notification is stored (i.e., registered) in the server storage unit 65, then a cycle of the process ends.

### [4-2-2. Process (Process 2B corresponding to Process 2)]

This section describes the process of picking up the delivery item using the delivery support system 1 of the first embodiment, with an example corresponding to the process 2 of the first embodiment (i.e., a process 2B).

In the process 2B of the in-vehicle process unit 25, further to the process of the process 1B, a process is added to determine whether the vehicle 3 has approached the delivery item sender using the position information from the GPS device 15, i.e., to determine whether it is a timing of pickup (i.e., a timing of acquiring voice).

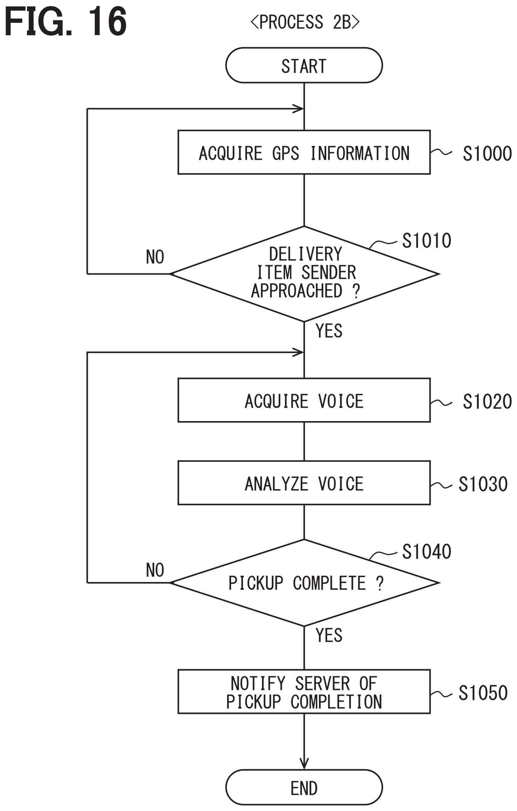

As shown in the flowchart in FIG. 16, in S1000, the in-vehicle device 9 acquires GPS information from the GPS device 15. Specifically, the process acquires the position information of the vehicle 3 and the like.

Subsequently in S1010, based on the position information of the vehicle 3 and the position information of the delivery item sender, it is determined whether the vehicle 3 has approached the delivery item sender or not. When a positive determination is made here, the process proceeds to S1020, and when a negative determination is made, the process returns to S1000. For example, when the distance between the position of the vehicle 3 and the delivery item sender is less than a predetermined value, it can be determined that the vehicle 3 has approached the delivery item sender.

In S1020, the process of acquiring voice is performed.

Subsequently in S1030, a voice analysis process is performed.

Subsequently in S1040, voice analysis is used to determine whether or not the pickup is complete. When a positive determination is made here, the process proceeds to S1050, and when a negative determination is made, the process returns to S1020.

In S1050, the in-vehicle device 9 sends, to the server 61, the pickup completion notification, then a cycle of the process ends.

The process in the server process unit 63 is the same as in the process 1B described above.

### [4-2-3. Process (Process 3B corresponding to Process 3)]

This section describes the process of picking the delivery item using the delivery support system 1 of the first embodiment, with an example corresponding to the process 3 of the first embodiment (i.e., a process 3B).

In the process 3B of the in-vehicle process unit 25, the process content of the process 2B has an addition of a process that uses the information from the ignition switch 21 to determine whether it is a timing of pickup (i.e., a timing of acquiring voice).

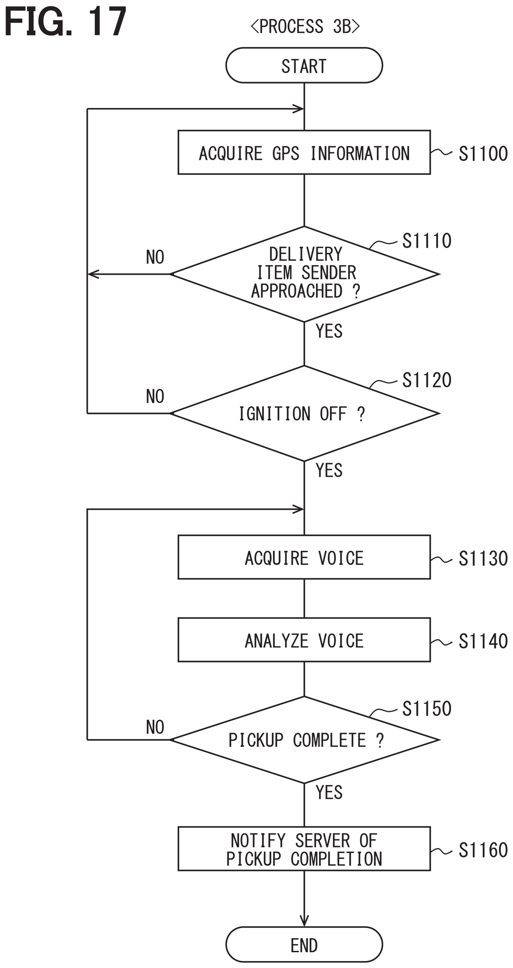

As shown in the flowchart in FIG. 17, in S1100, GPS information is acquired from the GPS device 15.

Subsequently in S1110, based on the position information of the vehicle 3 and the position information of the delivery destination, it is determined whether or not the vehicle 3 has approached the delivery destination. When a positive determination is made here, the process proceeds to S1120, and when a negative determination is made, the process returns to S1100.

In S1120, it is determined whether a state of the ignition switch 21 is off or not. When a positive determination is made here, the process proceeds to S1130, and when a negative determination is made, the process returns to S1100.

In S1130, the process of acquiring voice is performed.

Subsequently in S1140, a voice analysis process is performed.

Subsequently in S1150, it is determined whether the pickup is complete or not. When a positive determination is made here, the process proceeds to S1160, and when a negative determination is made, the process returns to S1130.

In S1160, the pickup completion notification is sent to the server 61, then a cycle of the process ends.

The process in the server process unit 63 is the same as in the process 2B described above.

[4-2-4. Process (Process 4B corresponding to the second embodiment) Next, a process 4B, which corresponds to the second embodiment, is described.

This section uses the second embodiment regarding the delivery support system 83 (see, for example, FIG. 8), and explains an example of a process corresponding to the second embodiment (a process 4B of picking up the delivery item).

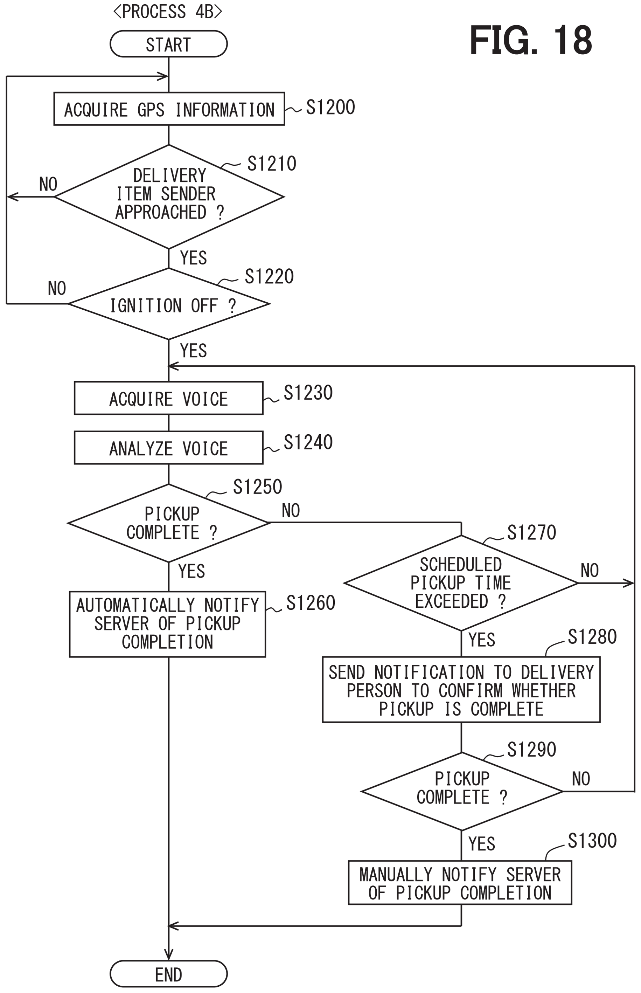

As shown in FIG. 18, in S1200, GPS information is acquired from the GPS device 15.

Subsequently in S1210, based on the position information of the vehicle 3 and the position information of the delivery destination, it is determined whether the vehicle 3 has approached the delivery destination or not. When a positive determination is made here, the process proceeds to S1220, and when a negative determination is made, the process returns to S1200.

In S1220, it is determined whether the state of the ignition switch 21 is off or not. When a positive determination is made here, the process proceeds to S1230, and when a negative determination is made, the process returns to S1200.

In S1230, the process of acquiring voice is performed.

Subsequently in S1240, a voice analysis process is performed.

Subsequently in S1250, it is determined whether the pickup is complete or not. When a positive determination is made here, the process proceeds to S1260, and when a negative determination is made, the process proceeds to S1270.

In S1260, the pickup completion notification is automatically sent to the server 61, then a cycle of the process ends. Note that, in such case, information indicating that the notification is automatically made is also notified.

In S1270, which is subsequent to a negative determination in S1250 described above, it is determined whether or not a scheduled pickup time set in a pickup plan in advance has been exceeded for the current delivery. When a positive determination is made here, the process proceeds to S1280, and when a negative determination is made, the process returns to S1230.

Note that the pickup plan is a plan for pickup (i.e., a pickup schedule) regarding how to pick up the delivery item (e.g., when to pick up) that is set in advance based on information on the delivery item (e.g., type and quantity of goods, address and name of the delivery item sender, a requested time for the delivery item sender to hand over the goods to the delivery person, and the like) using the server 61.

Since the server 61 stores the scheduled pickup time set in advance in the pickup plan for each of the delivery items, the status of pickup of the delivery item can be grasped according to whether or not there is a pickup completion notification at the scheduled pickup time for the delivery item to be picked up for the current delivery.

In S1280, since an automatic pickup completion notification has not been made even after the scheduled pickup time has passed, the server 61 sends a notification to the information terminal 81 to confirm whether pickup is complete (i.e., a status confirmation notification).

Subsequently in S1290, the status confirmation notification sent from the server 61 is displayed on the display 93 of the information terminal 81. For example, a message "Have you picked up the goods with the delivery number ...?" or the like is displayed. In such manner, the delivery person is prompted to confirm whether or not the delivery item is picked up. Confirmation may also be prompted by voice or other means. Then, when the pickup is complete, the process proceeds to S130, and when the pickup is not complete, the process return to S1230.

In S1300, the delivery person sends, to the server 61, the pickup completion notification by operating the input operation unit 95, then a cycle of the process ends. Note that, in such case, information indicating that the notification was made manually is also notified.

Such a process yields the same effect as the second embodiment.

The above-described "status confirmation notification" and manual input of pickup confirmation may also be performed by the in-vehicle device 9.

[4-2-5. Process (Process 5B corresponding to the third embodiment) Next, a process 5B, which corresponds to the third embodiment, is described.

This section uses the third embodiment regarding the delivery support system 101 (see, for example, FIG. 11), and explains an example of a process corresponding to the third embodiment (a process 5B of picking up the delivery item).

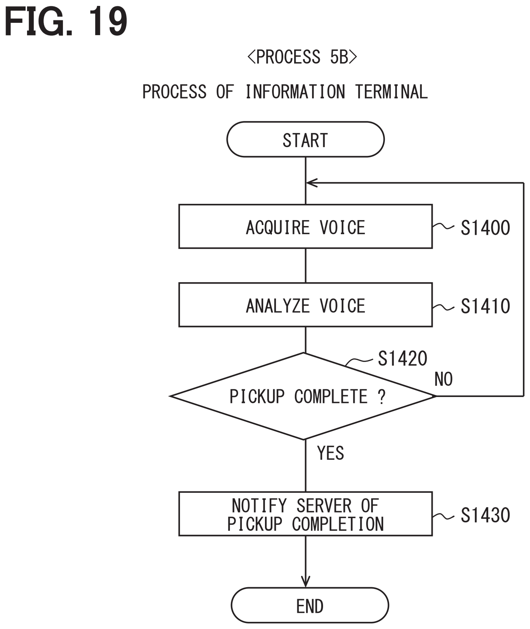

As shown in the flowchart in FIG. 19, in S1400, voice information is acquired using the terminal microphone 107 of the information terminal 81.

Subsequently in S1410, voice analysis is performed in the terminal process unit 103 of the information terminal 81.

Subsequently in S1420, the results of the voice analysis are used to determine whether or not the pickup is complete. When a positive determination is made here, the process proceeds to S1430, and when a negative determination is made, the process returns to S1400.

In S1430, since the pickup is complete, the information terminal 81 sends, to the server 61, the pickup completion notification, then a cycle of the process ends.

Such a process yields the same effect as the third embodiment.

### [4-3. Effects]

Although the fourth embodiment differs from the first to third embodiments in terms of whether it is about a delivery of the delivery item or a pickup thereof, it is possible to achieve the same efficiency in the delivery task as in the first to third embodiments when picking up a delivery item.

### [5. Other Embodiments]

Although the embodiments of the present disclosure have been described above, the present disclosure is not necessarily limited to those embodiments, and is implemented in various forms.

(5a) The delivery support device, the delivery support server, the delivery support system, and the delivery support method described in the present disclosure may be realized by a dedicated computer provided by configuring a processor and a memory programmed to perform one or more functions embodied by using a computer program.

Alternatively, the delivery support device, the delivery support server, the delivery support system, and the delivery support method described in the present disclosure may be realized by a dedicated computer provided by configuring the processor with one or more dedicated hardware logic circuits.

Alternatively, the delivery support device, the delivery support server, the delivery support system, and the delivery support method described in the present disclosure may also be realized by one or more dedicated computers configured as a combination of a processor and a memory programmed to perform one or more functions and a processor configured with one or more hardware logic circuits.

Further, the computer program may be stored in a computer-readable, non-transitory, tangible storage medium as instructions to be executed by the computer. The method of realizing the functions of each part in the delivery support device, the delivery support server, and the delivery support system described above need not necessarily include software, and all of the functions may be realized using one or more hardware components.

(5b) Further to the delivery support device, the delivery support server, and the delivery support system described above, the present disclosure may also be realized in various forms, such as a configuration comprising the delivery support device, the delivery support server, and the delivery support system, a program for causing a computer of the delivery support device, the delivery support server, and the delivery support system to function, a non-transitory, tangible recording medium such as a semiconductor memory in which the program is recorded, a control method of the above and the like.

(5c) Multiple functions of one element in each of the above embodiments may be realized by multiple elements, or one function of one element may be realized by multiple elements. Also, multiple functions of multiple elements may be implemented by one element, one function provided by multiple elements may be implemented by one element. Also, a part of the configuration of each of the embodiments described above may be omitted. Also, at least a part of the configuration of each of the embodiments described above may be added to or substituted for a configuration of another embodiment.

### [Technical features disclosed in the specification]

### [Item 1]

A delivery support device (9) is configured to support a delivery person in a task of delivering a delivery item to a delivery destination. The delivery support device includes: a delivery completion recognition unit (41) configured to analyze voice data of conversation between the delivery person and a customer of the delivery destination or utterance of the delivery person, which is made when the delivery item is delivered, and recognize that delivery of the delivery item is complete; and a delivery completion notification unit (43) configured to notify a predetermined notification target that the delivery of the delivery item is complete when the delivery completion recognition unit recognizes that the delivery of the delivery item is complete.

### [Item 2]

The delivery support device according to item 1, in which the delivery support device is configured to grasp a completion time of the delivery based on information on a time of the voice data, and the delivery support device is configured to notify, as information on the delivery item, time information including the completion time of the delivery and/or a gap between the completion time and a scheduled delivery time.

### [Item 3]

The delivery support device according to item 1 or 2, in which when the delivery person uses a movable object (3) for the delivery, the delivery support device is configured to notify, as the information on the delivery item, a most recent stop position of the movable object before or after a time when the completion of delivery is grasped.

### [Item 4]

The delivery support device according to any one of items 1 to 3 further including: an approach detection unit (45) configured to detect approach of the delivery person to the delivery destination based on a predetermined determination condition, in which the delivery support device is configured to acquire the voice data, when the approach detection unit detects that the delivery person has approached the delivery destination.

### [Item 5]

The delivery support device according to item 4, in which when the delivery person uses a powered movable object (3) for the delivery, the delivery support device is configured to acquire the voice data when the approach detection unit detects that the delivery person has approached the delivery destination and power of the powered movable object is stopped.

### [Item 6]

The delivery support device according to any one of items 1 to 5, in which the delivery support device is configured to be retrofitted to a movable object to be used by the delivery person for the delivery.

### [Item 7]

A delivery support system (1) including the delivery support device according to any one of items 1 to 6, in which when the delivery completion recognition unit does not recognize that the delivery of the delivery item is complete, the delivery support system is configured to prompt the delivery person to manually input that the delivery is complete, and after prompting manual input, when the manual input is performed by the delivery person on an information terminal, the delivery support system is configured to notify the notification target that the delivery is complete.

### [Item 8]

The delivery support system according to item 7, in which the delivery support system is configured to enable to distinguish whether the delivery completion notification is made (i) based on analysis of the voice data or (ii) based on the manual input.

### [Item 9]

A delivery support server (61) is configured to support a delivery person in a task of delivering a delivery item to a delivery destination. The delivery support is server configured to: receive, from outside, delivery completion notification that indicates completion of delivery of the delivery item, based on analysis of voice data of conversation between the delivery person and a customer of the delivery destination or utterance of the delivery person, when the delivery item is delivered, and time information including a completion time of the delivery acquired based on time information of the voice data and/or a gap between the completion time and a scheduled delivery time; and register, as information on the delivery item of which the delivery is complete, the delivery completion notification and the time information, which are linked to each other, to a database.

### [Item 10]

The delivery support server according to item 9, in which the delivery support server is configured to receive delivery completion notification indicating that the delivery is complete based on manual input performed by the delivery person on a predetermined device, and the delivery support server is configured to register the delivery completion notification to the database, such that the delivery completion notification enables to distinguish whether the delivery completion notification is made (i) based on analysis of the voice data or (ii) based on the manual input.

### [Item 11]

A delivery support system (1) is configured to support a delivery person in a task of delivering a delivery item to a delivery destination. The delivery support system includes: a delivery support device (9) configured to notify, to an outside, delivery completion notification indicating completion of delivery of the delivery item based on analysis of voice data of conversation between the delivery person and a customer of the delivery destination or utterance of the delivery person, when the delivery item is delivered, and time information including a completion time of the delivery of the delivery item acquired based on time information of the voice data and/or a gap between the completion time and a scheduled delivery time; and a delivery support server (61) configured to receive the delivery completion notification and the completion time from the delivery support device and register, as information on the delivery item of which the delivery is complete, the delivery completion notification and the time information, which are linked to each other, to a database.

### [Item 12]

A delivery support method is for supporting a delivery person in a task of delivering a delivery item to a delivery destination. The delivery support method includes: recognizing that delivery of the delivery item is complete by analyzing voice data of conversation between the delivery person and a customer of the delivery destination or utterance of the delivery person when the delivery item is delivered; and notifying a predetermined notification target that the delivery is complete, when completion of the delivery of the delivery item is recognized.

### [Item 13]

A program is usable on a computer of a device configured to support a delivery person in a task of delivering a delivery item to a delivery destination. The program is configured to cause the computer to: recognize that delivery of the delivery item is complete by analyzing voice data of conversation between the delivery person and a customer of the delivery destination or utterance of the delivery person when the delivery item is delivered; and notify a predetermined notification target that the delivery is complete, when completion of the delivery of the delivery item is recognized.

### [Item 14]

A delivery support method is for supporting a delivery person in a task of delivering a delivery item to a delivery destination. The delivery support method includes: receiving, from outside, delivery completion notification indicating completion of delivery of the delivery item based on analysis of voice data of conversation between the delivery person and a customer of the delivery destination or utterance of the delivery person, when the delivery item is delivered, and time information including a completion time of the delivery of the delivery item acquired based on time information of the voice data and/or a gap between the completion time and a scheduled delivery time; and registering, as information on the delivery item of which the delivery is complete, the delivery completion notification and the time information, which are linked to each other, to a database.

### [Item 15]

A program is usable on a computer of a server configured to support a delivery person in a task of delivering a delivery item to a delivery destination. The program is configured to cause the computer to receive, from outside, delivery completion notification indicating completion of delivery of the delivery item based on analysis of voice data of conversation between the delivery person and a customer of the delivery destination or utterance of the delivery person, when the delivery item is delivered, and time information including a completion time of the delivery of the delivery item acquired based on time information of the voice data and/or a gap between the completion time and a scheduled delivery time; and register, as information on the delivery item of which the delivery is complete, the delivery completion notification and the time information, which are linked to each other, to a database.

### [Item 16]

A delivery support device is configured to support a delivery person in a task of picking up a delivery item from a delivery item sender. The delivery support device includes: a pickup completion recognition unit (121) configured to analyze voice data of conversation between the delivery person and a customer of the delivery item sender or utterance of the delivery person, which is made when the delivery item is picked up, and recognize that pickup of the delivery item is complete; and a pickup completion notification unit (123) configured to notify a predetermined notification target that the pickup of the delivery item is complete when the pickup completion recognition unit recognizes that pickup of the delivery item is complete.

### [Item 17]

The delivery support device according to item 16, further including: an approach detection unit (125) configured to detect approach of the delivery person to the delivery item sender based on a predetermined determination condition, in which the delivery support device is configured to acquire the voice data when the approach detection unit detects that the delivery person has approached the delivery item sender.

### [Item 18]

The delivery support device according to item 16 or 17, in which when the delivery person uses a powered movable object (3) for the delivery, the delivery support device is configured to acquire the voice data when the approach detection unit detects that the delivery person has approached the delivery item sender and power of the powered movable object is stopped.

### [Item 19]

A delivery support system including the delivery support device according to one of items 16 to 18, in which when the pickup completion recognition unit does not recognize that the pickup of the delivery item is complete, the delivery support system is configured to prompt the delivery person to manually input that the pickup is complete, and after prompting manual input, when the manual input is performed by the delivery person, the delivery support system is configured to notify that the pickup is complete.

### [Item 20]

The delivery support system according to item 19, in which the delivery support system is configured to enable to distinguish whether the pickup completion notification is made (i) based on analysis of the voice data or (ii) based on the manual input.

### [Item 21]

The delivery support device according to one of items 16 to 20, in which the delivery support device is configured to be retrofitted to a movable object to be used by the delivery person for the pickup.

### [Item 22]

The delivery support device according to one of items 16 to 21, in which when the pickup completion recognition unit does not recognize that the pickup of the delivery item is complete, the delivery support system is configured to prompt the delivery person to manually input that the pickup is complete, and after prompting manual input, when the manual input is performed by the delivery person on an information terminal, the delivery support system is configured to notify the notification target that the pickup is complete.

### [Item 23]

The delivery support device according to item 22, in which the delivery support system is configured to enable to distinguish whether the pickup completion notification is made (i) based on analysis of the voice data or (ii) based on the manual input.

### [Item 24]

A delivery support server (61) is configured to support a delivery person in a task of picking up a delivery item from a delivery item sender. The delivery support server is configured to: receive, from outside, pickup completion notification that indicates completion of pickup of the delivery item, based on analysis of voice data of conversation between the delivery person and a customer of the delivery item sender or utterance of the delivery person, when the delivery item is picked up, and time information including a completion time of the pickup acquired based on time information of the voice data and/or a gap between the completion time and a scheduled pickup time; and register, as information on the delivery item of which the pickup is complete, the pickup completion notification and the time information, which are linked to each other, to a database.

### [Item 25]

The delivery support server according to item 24, in which the delivery support server is configured to receive pickup completion notification indicating that the pickup is complete based on manual input performed by the delivery person on a predetermined device, and the delivery support server is configured to register the pickup completion notification to the database, such that the pickup completion notification enables to distinguish whether the pickup completion notification is made (i) based on analysis of the voice data or (ii) based on the manual input.

### [Item 26]

A delivery support system (1) is configured to support a delivery person in a task of picking up a delivery item from a delivery item sender. The delivery support system includes: a delivery support device (9) configured to notify, to an outside, pickup completion notification indicating completion of pickup of the delivery item based on analysis of voice data of conversation between the delivery person and a customer of the delivery item sender or utterance of the delivery person, when the delivery item is picked up, and time information including a completion time of the pickup of the delivery item acquired based on time information of the voice data and/or a gap between the completion time and a scheduled pickup time; and a delivery support server (61) configured to receive the pickup completion notification and the completion time from the delivery support device and register, as information on the delivery item of which the pickup is complete, the pickup completion notification and the time information, which are linked to each other, to a database.

### [Item 27]

A delivery support method is for supporting a delivery person in a task of picking up a delivery item from a delivery item sender. The delivery support method includes: recognizing that pickup of the delivery item is complete by analyzing voice data of conversation between the delivery person and a customer of the delivery item sender or utterance of the delivery person when the delivery item is picked up; and notifying a predetermined notification target that the pickup is complete, when completion of the pickup of the delivery item is recognized.

### [Item 28]

A program is usable on a computer of a device configured to support a delivery person in a task of picking up a delivery item from a delivery item sender. The program is configured to cause the computer to: recognize that pickup of the delivery item is complete by analyzing voice data of conversation between the delivery person and a customer of the delivery item sender or utterance of the delivery person when the delivery item is picked up; and notify a predetermined notification target that the pickup is complete, when completion of the pickup of the delivery item is recognized.

### [Item 29]

A delivery support method is for supporting a delivery person in a task of picking up a delivery item from a delivery item sender. The delivery support method includes: receiving, from outside, pickup completion notification indicating completion of pickup of the delivery item based on analysis of voice data of conversation between the delivery person and a customer of the delivery item sender or utterance of the delivery person, when the delivery item is picked up, and time information including a completion time of the pickup of the delivery item acquired based on time information of the voice data and/or a gap between the completion time and a scheduled pickup time; and registering, as information on the delivery item of which the pickup is complete, the pickup completion notification and the time information, which are linked to each other, to a database.

### [Item 30]

A program is usable on a computer of a server configured to support a delivery person in a task of picking up a delivery item from a delivery item sender. The program is configured to cause the computer to receive, from outside, pickup completion notification indicating completion of pickup of the delivery item based on analysis of voice data of conversation between the delivery person and a customer of the delivery item sender or utterance of the delivery person, when the delivery item is picked up, and time information including a completion time of the pickup of the delivery item acquired based on time information of the voice data and/or a gap between the completion time and a scheduled pickup time; and register, as information on the delivery item of which the pickup is complete, the pickup completion notification and the time information, which are linked to each other, to a database.

## Claims

1. A delivery support device (9) configured to support a delivery person in a task of delivering a delivery item to a delivery destination, the delivery support device comprising:
a delivery completion recognition unit (41) configured to
analyze voice data of conversation between the delivery person and a customer of the delivery destination or utterance of the delivery person, which is made when the delivery item is delivered, and
recognize that delivery of the delivery item is complete; and
a delivery completion notification unit (43) configured to notify a predetermined notification target that the delivery of the delivery item is complete when the delivery completion recognition unit recognizes that the delivery of the delivery item is complete.

2. The delivery support device according to claim 1, wherein
the delivery support device is configured to grasp a completion time of the delivery based on information on a time of the voice data, and
the delivery support device is configured to notify, as information on the delivery item, time information including the completion time of the delivery and/or a gap between the completion time and a scheduled delivery time.

3. The delivery support device according to claim 1, wherein
when the delivery person uses a movable object (3) for the delivery, the delivery support device is configured to notify, as the information on the delivery item, a most recent stop position of the movable object before or after a time when the completion of delivery is grasped.

4. The delivery support device according to claim 1 further comprising:
an approach detection unit (45) configured to detect approach of the delivery person to the delivery destination based on a predetermined determination condition, wherein
the delivery support device is configured to acquire the voice data, when the approach detection unit detects that the delivery person has approached the delivery destination.

5. The delivery support device according to claim 4, wherein
when the delivery person uses a powered movable object (3) for the delivery, the delivery support device is configured to acquire the voice data when the approach detection unit detects that the delivery person has approached the delivery destination and power of the powered movable object is stopped.

6. The delivery support device according to claim 1, wherein
the delivery support device is configured to be retrofitted to a movable object to be used by the delivery person for the delivery.

7. A delivery support system (1) including the delivery support device according to claim 1, wherein
when the delivery completion recognition unit does not recognize that the delivery of the delivery item is complete, the delivery support system is configured to prompt the delivery person to manually input that the delivery is complete, and
after prompting manual input, when the manual input is performed by the delivery person on an information terminal, the delivery support system is configured to notify the notification target that the delivery is complete.

8. The delivery support system according to claim 7, wherein
the delivery support system is configured to enable to distinguish whether the delivery completion notification is made (i) based on analysis of the voice data or (ii) based on the manual input.

9. A delivery support server (61) configured to support a delivery person in a task of delivering a delivery item to a delivery destination, the delivery support server configured to:
receive from outside
delivery completion notification that indicates completion of delivery of the delivery item, based on analysis of voice data of conversation between the delivery person and a customer of the delivery destination or utterance of the delivery person, when the delivery item is delivered, and
time information including a completion time of the delivery acquired based on time information of the voice data and/or a gap between the completion time and a scheduled delivery time; and
register, as information on the delivery item of which the delivery is complete, the delivery completion notification and the time information, which are linked to each other, to a database.

10. The delivery support server according to claim 9, wherein
the delivery support server is configured to receive delivery completion notification indicating that the delivery is complete based on manual input performed by the delivery person on a predetermined device, and
the delivery support server is configured to register the delivery completion notification to the database, such that the delivery completion notification enables to distinguish whether the delivery completion notification is made (i) based on analysis of the voice data or (ii) based on the manual input.

11. A delivery support system (1) configured to support a delivery person in a task of delivering a delivery item to a delivery destination, the delivery support system comprising:
a delivery support device (9) configured to notify, to an outside,
delivery completion notification indicating completion of delivery of the delivery item based on analysis of voice data of conversation between the delivery person and a customer of the delivery destination or utterance of the delivery person, when the delivery item is delivered, and
time information including a completion time of the delivery of the delivery item acquired based on time information of the voice data and/or a gap between the completion time and a scheduled delivery time; and
a delivery support server (61) configured to
receive the delivery completion notification and the completion time from the delivery support device and
register, as information on the delivery item of which the delivery is complete, the delivery completion notification and the time information, which are linked to each other, to a database.

12. A delivery support method for supporting a delivery person in a task of delivering a delivery item to a delivery destination, the delivery support method comprising:
recognizing that delivery of the delivery item is complete by analyzing voice data of conversation between the delivery person and a customer of the delivery destination or utterance of the delivery person when the delivery item is delivered; and
notifying a predetermined notification target that the delivery is complete, when completion of the delivery of the delivery item is recognized.

13. A program usable on a computer of a device configured to support a delivery person in a task of delivering a delivery item to a delivery destination, the program configured to cause the computer to:
recognize that delivery of the delivery item is complete by analyzing voice data of conversation between the delivery person and a customer of the delivery destination or utterance of the delivery person when the delivery item is delivered; and
notify a predetermined notification target that the delivery is complete, when completion of the delivery of the delivery item is recognized.

14. A delivery support method for supporting a delivery person in a task of delivering a delivery item to a delivery destination, the delivery support method comprising:
receiving from outside
delivery completion notification indicating completion of delivery of the delivery item based on analysis of voice data of conversation between the delivery person and a customer of the delivery destination or utterance of the delivery person, when the delivery item is delivered, and
time information including a completion time of the delivery of the delivery item acquired based on time information of the voice data and/or a gap between the completion time and a scheduled delivery time; and
registering, as information on the delivery item of which the delivery is complete, the delivery completion notification and the time information, which are linked to each other, to a database.

15. A program usable on a computer of a server configured to support a delivery person in a task of delivering a delivery item to a delivery destination, the program configured to cause the computer to
receive from outside
delivery completion notification indicating completion of delivery of the delivery item based on analysis of voice data of conversation between the delivery person and a customer of the delivery destination or utterance of the delivery person, when the delivery item is delivered, and
time information including a completion time of the delivery of the delivery item acquired based on time information of the voice data and/or a gap between the completion time and a scheduled delivery time; and
register, as information on the delivery item of which the delivery is complete, the delivery completion notification and the time information, which are linked to each other, to a database.

16. A delivery support device configured to support a delivery person in a task of picking up a delivery item from a delivery item sender, the delivery support device comprising:
a pickup completion recognition unit (121) configured to
analyze voice data of conversation between the delivery person and a customer of the delivery item sender or utterance of the delivery person, which is made when the delivery item is picked up, and
recognize that pickup of the delivery item is complete; and
a pickup completion notification unit (123) configured to notify a predetermined notification target that the pickup of the delivery item is complete when the pickup completion recognition unit recognizes that pickup of the delivery item is complete.

17. The delivery support device according to claim 16, further comprising:
an approach detection unit (125) configured to detect approach of the delivery person to the delivery item sender based on a predetermined determination condition, wherein
the delivery support device is configured to acquire the voice data when the approach detection unit detects that the delivery person has approached the delivery item sender.

18. The delivery support device according to claim 17, wherein
when the delivery person uses a powered movable object (3) for the delivery, the delivery support device is configured to acquire the voice data when the approach detection unit detects that the delivery person has approached the delivery item sender and power of the powered movable object is stopped.

19. A delivery support system including the delivery support device according to claim 16, wherein
when the pickup completion recognition unit does not recognize that the pickup of the delivery item is complete, the delivery support system is configured to prompt the delivery person to manually input that the pickup is complete, and
after prompting manual input, when the manual input is performed by the delivery person, the delivery support system is configured to notify that the pickup is complete.

20. The delivery support system according to claim 19, wherein
the delivery support system is configured to enable to distinguish whether the pickup completion notification is made (i) based on analysis of the voice data or (ii) based on the manual input.
